# EUROPEAN PATENT APPLICATION

(11) **EP 4 374 759 A1**
(43) Date of publication of application: **29.05.2024**
(21) Application number: 23211494.2
(22) Date of filing: 22.11.2023
(51) Int. Cl.: A47L 7/00, A47L 9/24, A47L 9/32, B23Q 11/00

(54) **HAND MOUNTABLE VACUUM ATTACHMENT**

(30) Priority: 26.11.2022 US 202263428067 P; 10.08.2023 US 202318447660
(71) Applicant: Cooner, Charles, Janesville, WI 53545 (US)
(72) Inventor: Cooner, Charles, Janesville, WI 53545 (US)
(74) Representative: Barker Brettell LLP

(57) **Abstract**

A vacuum attachment that is mountable to and/or wearable on the back of a hand and/or power tool user's hand, the attachment including a positionable modular hose that may be adjusted to position a distal end of the hose near the power tool attachment or the power tool such that it can more optimally capture dust and debris resulting from working a workpiece with the power tool attachment while the vacuum attachment is operatively associated with a vacuum source.

## Description

### CROSS REFERENCE TO RELATE APPLICATIONS

This application claims the benefit of United States Provisional Patent Application No. 63/428,067, filed November 26, 2022, entitled "Hand-mounted Positionable Vacuum Attachment," the entire content of which is hereby incorporated by reference.

### FIELD

The present inventions relate to the field of debris and dust collection, hand tools and power tools. The present inventions more specifically relate to the field of user mountable attachments for vacuuming and collecting dust and debris produced by hand and power tools.

### BACKGROUND

Many hand tools and power tools produce dust, shavings and other debris when applied to or used on a workpiece. The debris can be hazardous and create mess requiring cleanup. In some cases, such as with a workpiece containing lead, lead debris can be spread and create a hazard that can remain even after a work site is cleaned up. While the operator of a hand tool can occasionally use one hand to work the tool and another hand to grip a vacuum attachment for collecting debris from the workpiece, this is tedious and can create or lead to safety issues. Further, this option is unavailable in many instances where two hands are needed to hold the tool or the tool and/or workpiece. While the tool user could work the workpiece with a tool while a second person grips a vacuum attachment in those instances, that requires a second person and more labor.

There is a need for a vacuum attachment that helps optimize dust and debris collection.

There is a need for vacuum attachment that can be positioned relative to a workpiece and/or a tool attachment (such as a bit, blade or other material remover attachment) being applied to the workpiece.

### SUMMARY

Accordingly, it is an object of the present disclosure to provide hand mountable or wearable vacuum attachments.

Accordingly, it is also an object of the present disclosure to provide vacuum attachments that can be positioned relative to a workpiece by the user of a tool having a tool attachment (such as a bit, blade or other material remover attachment) being applied to that workpiece.

Accordingly, it is also an object of the present disclosure to provide a vacuum attachment comprising: a coupler comprising a plate member having a first surface and a second surface, and an adaptor coupled to the first surface; whereby the second surface of the plate member is substantially arcuate shaped; whereby the adaptor defines a tubular shaped conduit extending from a first end of the adaptor towards a second end of the adaptor; whereby the first end of the adaptor is adapted to be coupled to and adapted to be in fluid communication with a vacuum hose in fluid communication with a vacuum source; and whereby the second end of the adaptor is coupled to and in fluid communication with an attachment hose.

Accordingly, it is also an object of the present disclosure to provide a vacuum attachment comprising: a coupler comprising a plate member having a first surface and a second surface; and an adaptor coupled to the first surface; whereby the second surface of the plate member is adapted to receive the back of a human hand; whereby the adaptor defines a tubular shaped conduit extending from a first end of the adaptor towards a second end of the adaptor; whereby the first end of the adaptor is adapted to be coupled to and in fluid communication with a vacuum hose in fluid communication with a vacuum source; and whereby the second end of the adaptor is coupled to and in fluid communication with an attachment hose.

Accordingly, it is also an object of the present disclosure to provide A method of collecting dust and debris being worked on by a tool, the method comprising: coupling a vacuum attachment to the back of the hand of a user of a tool having a material remover attachment whereby the vacuum attachment comprises a coupler comprising a plate member having a first surface and a second surface, an adaptor coupled to the first surface, the adaptor defining a tubular shaped conduit extending from a first end of the adaptor towards a second end of the adaptor, and the second end of the adaptor being coupled to and in fluid communication with a proximate end of an attachment hose; coupling the first end of the adaptor to a vacuum hose in fluid communication with a vacuum source; positioning a distal end of the attachment hose near the material remover attachment and/or a workpiece to be worked by the material remover attachment; activating the vacuum source; and working the workpiece with the material remover attachment of the tool.

### BRIEF DESCRIPTION OF DRAWINGS

Various examples of embodiments of the systems, devices, and methods according to this invention will be described in detail, with reference to the following figures, wherein:
FIG. 1 illustrates a first perspective view of a hand wearable or mountable vacuum attachment, according to various examples of embodiments;
FIG. 2 illustrates a second perspective view of a hand wearable or mountable vacuum attachment, according to various examples of embodiments;
FIG. 3 illustrates a first partial perspective view of the hand wearable or mountable vacuum attachment of FIG. 1;
FIG. 4 illustrates a second partial perspective view of the hand wearable or mountable vacuum attachment of FIG. 1;
FIG. 5 illustrates an exploded perspective view of the hand wearable or mountable vacuum attachment of FIG. 1;
FIG. 6 illustrates a first perspective view of a coupler of the hand wearable or mountable vacuum attachment of FIG. 1;
FIG. 7 illustrates a second perspective view of the coupler of the hand wearable or mountable vacuum attachment of FIG. 1;
FIG. 8 illustrates a perspective view of a hand wearable or mountable vacuum attachment, according to various examples of embodiments, fluidly coupled to a vacuum hose and coupled to a hand of a user using a reciprocating saw;
FIG. 9 illustrates a perspective view of a hand wearable or mountable vacuum attachment, according to various examples of embodiments, fluidly coupled to a vacuum hose and coupled to a hand of a user using a reciprocating saw;
FIG. 10 illustrates a perspective view of a hand wearable or mountable vacuum attachment, according to various examples of embodiments, fluidly coupled to a vacuum hose and coupled to a hand of a user using a demolition hammer;
FIG. 11 illustrates a perspective view of a hand wearable or mountable vacuum attachment, according to various examples of embodiments, fluidly coupled to a vacuum hose and coupled to a hand of a user using a circular saw;
FIG. 12 illustrates a perspective view of a hand wearable or mountable vacuum attachment, according to various examples of embodiments, fluidly coupled to a vacuum hose and coupled to a hand of a user using a sander; and
FIG. 13 illustrates a perspective view of a hand wearable or mountable vacuum attachment, according to various examples of embodiments, fluidly coupled to a vacuum hose and coupled to a hand of a user using a jigsaw.

It should be understood that the drawings are not necessarily to scale. In certain instances, details that are not necessary to the understanding of the invention or render other details difficult to perceive may have been omitted. It should be understood, of course, that the invention is not necessarily limited to the particular embodiments illustrated herein.

### DETAILED DESCRIPTION

Referring to the Figures, a user or operator wearable or mountable vacuum attachment and method for using same are provided.

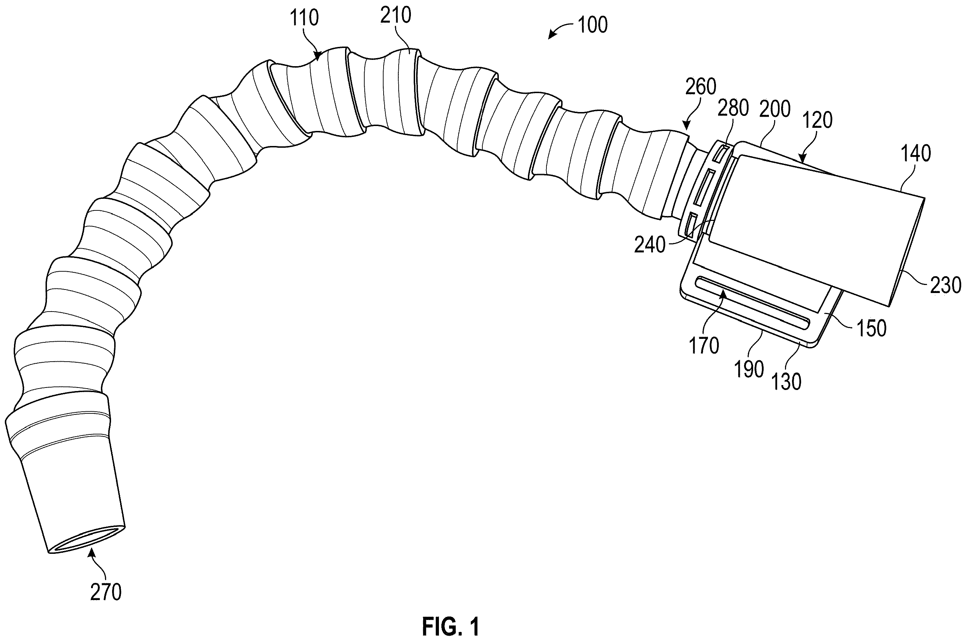

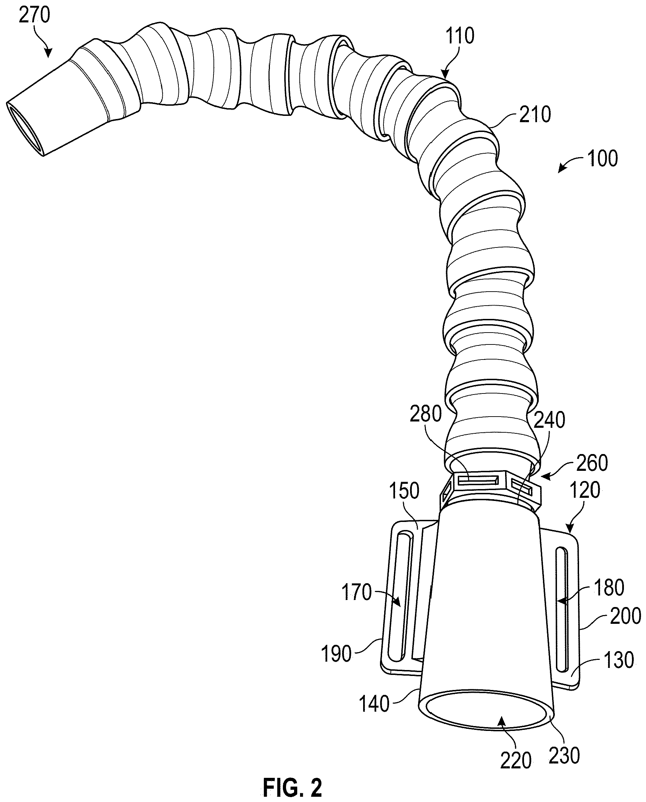

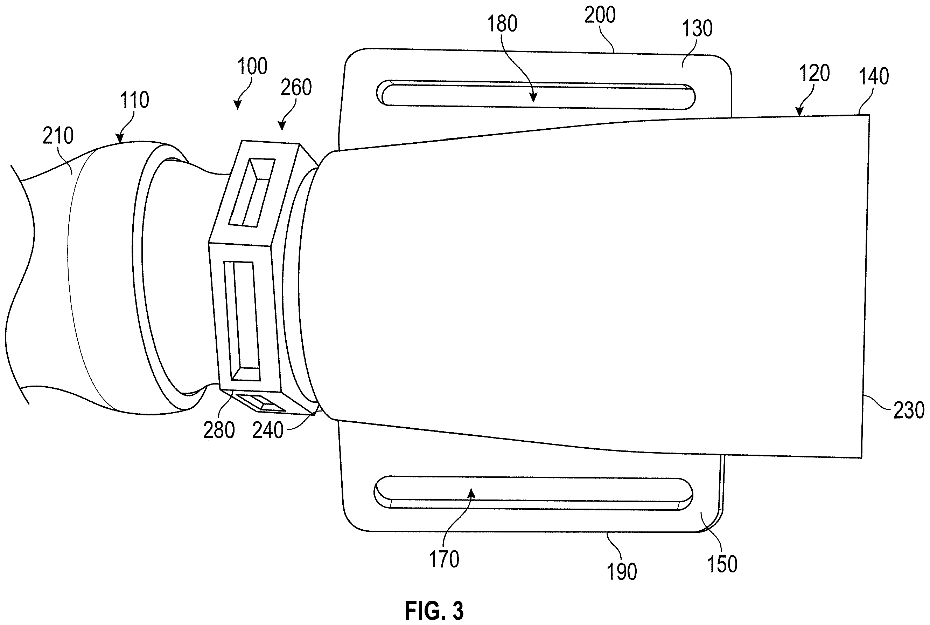

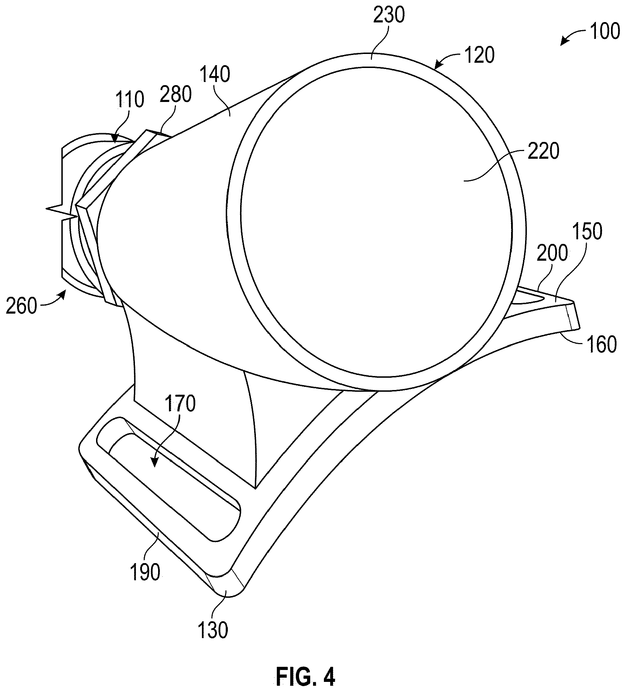

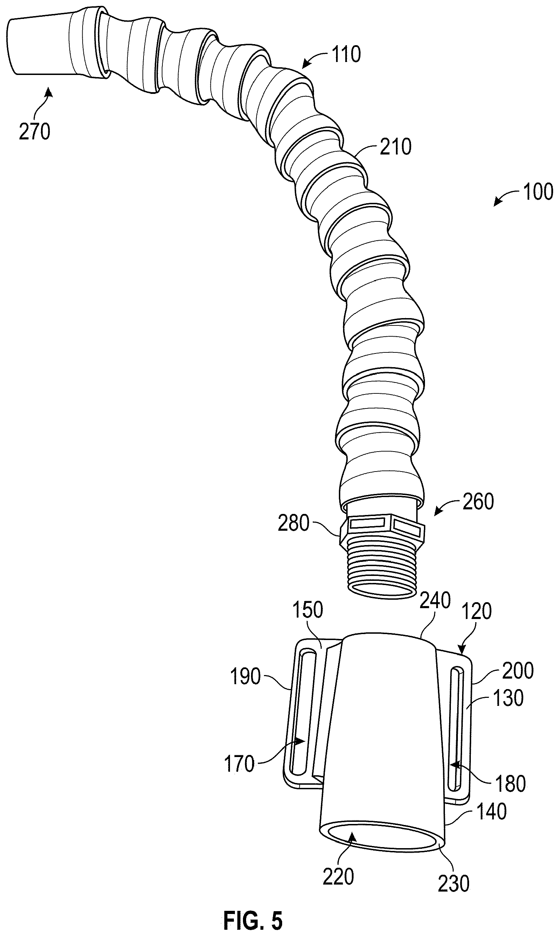

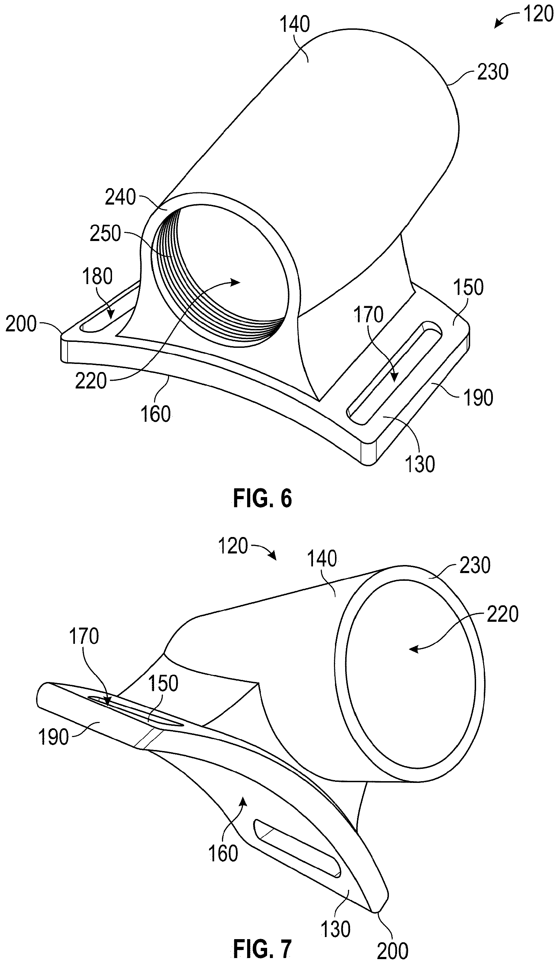

Referring to FIGS. 1-7, a vacuum attachment 100, according to various examples of embodiments, which can be removably coupled to or relative to a user's hand (e.g., the back of the hand) is illustrated. It should be appreciated, however, that the vacuum attachment may be removably coupled to or relative to another body part (e.g., wrist or arm) but the hand tends to be more optimal as it tends to better maintain its position and/or orientation relative to the tool and/or tool attachment during use compared to other user body parts. Vacuum attachment 100 includes an attachment hose 110, and a wearable (e.g., hand wearable) coupler 120 in accordance with various exemplary embodiments. An advantage of the coupler 120 is that coupler 120, in various examples of embodiments, includes and/or utilizes a plate member 130 coupled to an adaptor 140.

In various embodiments, wearable coupler 120 includes plate member 130 coupled to adaptor 140. In various embodiments, plate member 130 has a first surface 150, a second surface 160 disposed opposite to first surface 150, and elongated apertures 170, 180 extending therethrough. In various embodiments, plate member 130 further includes a first side 190 and a second side 200. In various examples of embodiments, elongated aperture 170 is disposed proximate to first side 190. Further, in various embodiments, elongated aperture 180 is disposed proximate to second side 200.

In various exemplary embodiments, plate member 130 is a substantially arcuate-shaped plate member 130. In various embodiments, second surface 160 is substantially arcuate-shaped. In various examples of embodiments, coupler 120 and/or plate member 130 is constructed of plastic. In an alternative embodiment, the coupler and/or plate member could be constructed out of another material such as stainless steel or a ceramic, for example.

In various exemplary embodiments, adaptor 140 is bracketed or coupled to first surface 150. In various embodiments, adaptor 140 is tubular, cylindrical or ring shaped. While adaptor 140 is illustrated as oriented such that a longitudinal axis of adaptor is substantially parallel to first side 190 and second side 200, it should be appreciated that adaptor 140 may be oriented in other ways.

In various examples of embodiments, adaptor 140 defines a tubular, cylindrical, arcuate, or ring-shaped space or conduit 220 extending from a first end 230 of adaptor 140 to a second end 240 of adaptor 140. In various embodiments, space or conduit 220 tapers at least in part as it extends from or between first end 230 and second end 240. In various other embodiments, the space or conduit is substantially the same in cross section from or between the first end and the second end.

In various embodiments, space or conduit 220 proximate to second end 240 of adaptor 140 is in fluid communication with attachment hose 110. In various embodiments, space or conduit 220 proximate to first end 230 of adaptor 140 is configured to be coupled (e.g., by friction fit) to a vacuum hose in fluid communication with a vacuum source.

In various embodiments, a section of adaptor 140 defining space or conduit 220 proximate to second end 240 includes threading 250. In various embodiments, attachment hose 110 includes a proximate end 260 and a distal end 270. In various embodiments, proximate end 260 of attachment hose 110 is coupled to second end 240 of adaptor 140. In one embodiment, attachment hose 110 includes a fitting 280 having threading thereon for engaging threading 250 of adaptor 140. In various embodiments, attachment hose 110 includes a nozzle 290 coupled to or forming at least part of distal end 270.

In various embodiments, attachment hose 110 is or includes an adjustable or modular hose. In various embodiments, attachment hose 110 includes a modular hose composed of multiple modular links. For example, modular hose may be a Loc-Line^{®} (from Lockwood Products, Lake Oswego, Oreg.) hose or otherwise include multiple Loc-Line^{®} links. In more general embodiments, attachment hose 110 includes at least one section that is flexible (e.g., selectively flexible), preferably corrugated and most preferably constructed of loc-line-type articulated joints that have hollow interiors adapted or configured to be in fluid communication with a vacuum source.

The attachment hose can be made of metal, plastic or of inter-locking plastic segments and similar plastic segments, which are available from Lockwood Products and different manufacturers and give the same effect. Attachment hose 110 made of these segments can be twisted in any direction, axis and/or shape. These interlocking segments may be used to position distal end 270 of attachment hose 110 as desired or otherwise to optimize debris and dust collection near distal end 270 of attachment hose 110 when distal end 270 is in fluid communication with a vacuum source.

In various embodiments, one or more straps (not shown) are coupled to plate member 130 (e.g., by inserting or threading the one or more straps through elongated apertures 170 and/or 180. In various embodiments, the plate member could be sewn into or otherwise coupled to a glove or band that could be worn by the user (e.g., on the hand of the user).

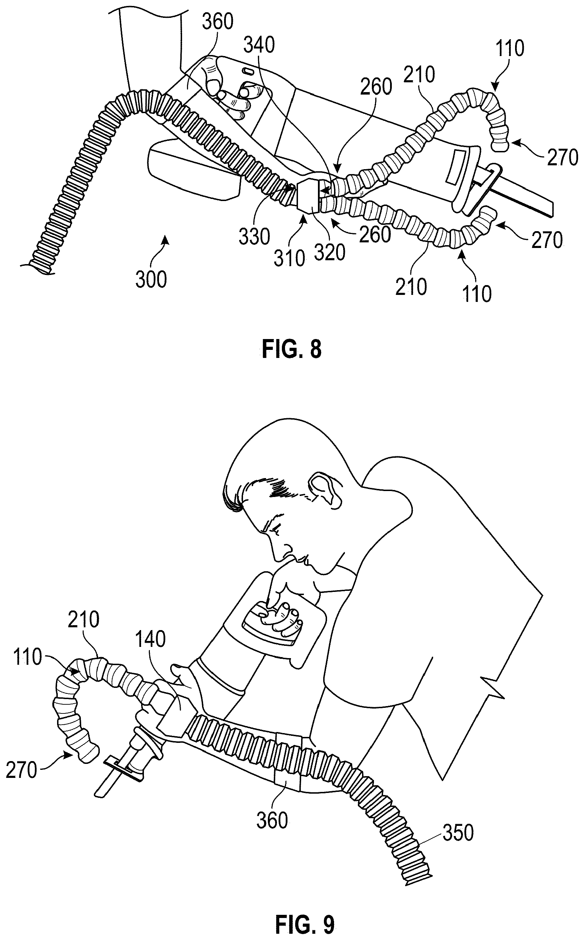

Referring now to FIG. 8, a vacuum attachment 300, according to various examples of embodiments, which can be removably coupled to or relative to a user's hand (e.g., the back of the hand) is illustrated. It should be appreciated, however, that the vacuum attachment may be removably coupled to or relative to another body part (e.g., wrist or arm) but the hand tends to be preferable as it tends to better maintain its position and/or orientation relative to the tool and/or tool attachment during use as compared to other user body parts. Vacuum attachment 300 includes at least one attachment hose 110, and a hand wearable coupler 310 in accordance with various exemplary embodiments. Coupler 310, in various examples of embodiments, includes or utilizes a plate member coupled to an adaptor 320.

In various examples of embodiments, adaptor 320 defines a tubular, cylindrical, arcuate, or ring-shaped space or conduit extending from a first end 330 of adaptor 320 towards a second end 340 of adaptor 320. In various embodiments, a manifold that defines and branches into a plurality of inlets is provided at or near second end 340, which inlets are in fluid communication with attachment hoses 110.

In various embodiments, the inlets branching from the manifold include threading. In various embodiments, proximate end 260 of each attachment hose 110 includes a fitting having threading thereon for engaging threading of an inlet of the manifold.

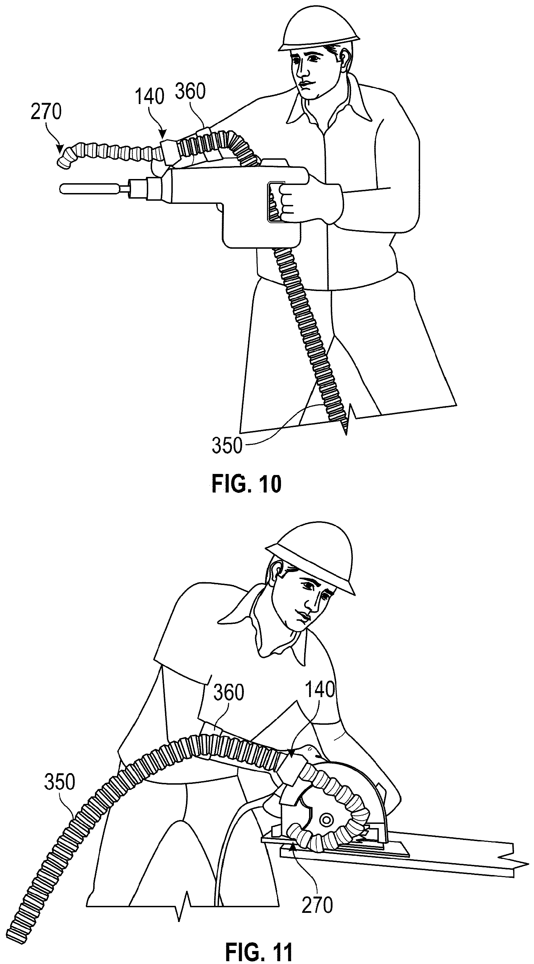

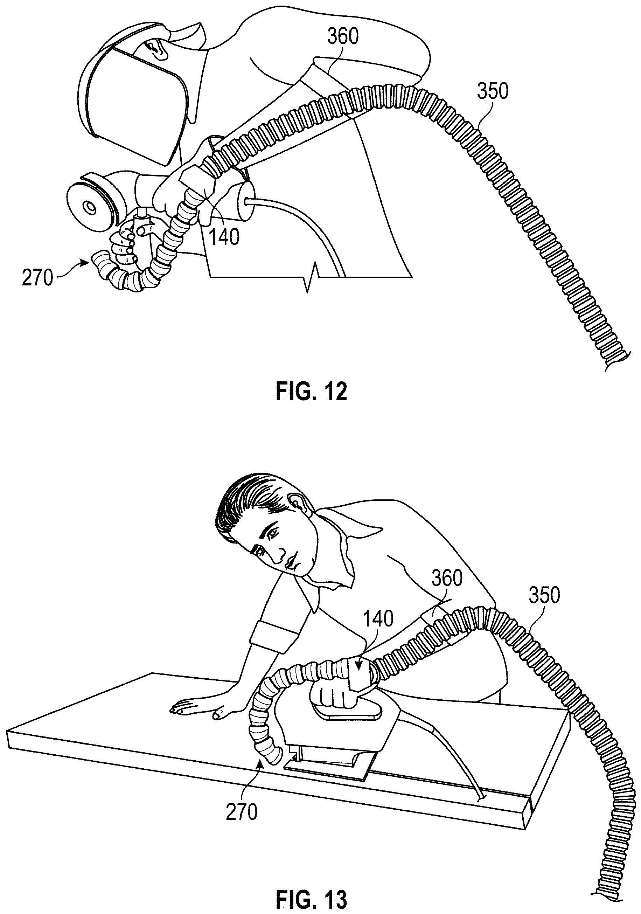

Referring now to FIGS. 8-13, in operation, to prevent the spread of dust and debris, and/or to improve the collection of same, in various embodiments, adaptor 140, 320 of vacuum attachment 100, 300 is mounted or coupled to a user's hand or relative to the user's hand such that adaptor 140, 320 remains in substantially the same position relative to the user's hand. The adaptor may be mounted or coupled to or relative to either hand of the user.

Either before or after adaptor 140, 320 is mounted or coupled to a user's hand or relative to the user's hand, first end 230, 330 of adaptor 140, 320 is coupled to a vacuum hose 350 connected to a vacuum source. Vacuum hose 350 may also be coupled to the user (e.g., the arm or wrist leading to the hand on which adaptor 140, 320 is provided) by a band or strap 360. After coupling adaptor 140, 320 to vacuum hose 350, and activating the vacuum source in fluid communication therewith, vacuum attachment 100, 300 creates or provides an air intake or suction at or about the distal end 270 of attachment hose 110 of attachment 100, 300.

Depending on a variety of factors including, without limitation, the hand to which the adaptor is mounted or coupled to or positioned relative to, the tool being used and where most dust and debris falls or exits relative to the tool, and the workpiece and/or its position relative to the user or the tool, and/or user preference or desire, the user may bend or otherwise adjust attachment hose(s) 110 of vacuum attachment 100, 300 to position distal end 270 of attachment hose(s) 110 as desired or otherwise to optimize debris and dust collection by the air intake or suction near distal end 270 of attachment hose(s) 110 when distal end 270 is in fluid communication with the vacuum source without interfering with the application of the tool to the workpiece or otherwise creating any safety issues. The user may manipulate or adjust attachment hose(s) 110 of attachment 100, 300 any time as desired.

Dust and debris is then collected by the air intake or suction provided near distal end 270 of attachment hose(s) 110 and moved by the vacuum or suction created by the vacuum source through attachment hose(s) 110, adaptor 140, 320 and vacuum hose 350 into a filter associated with the vacuum source, which filter helps capture some of that dust and debris.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that references to relative positions (e.g., "top" and "bottom") in this description are merely used to identify various elements as are oriented in the Figures. It should be recognized that the orientation of particular components may vary greatly depending on the application in which they are used.

For the purpose of this disclosure, the term "coupled" means the joining of two members directly or indirectly to one another. Such joining may be stationary in nature or moveable in nature. Such joining may be achieved with the two members or the two members and any additional intermediate members being integrally formed as a single unitary body with one another or with the two members or the two members and any additional intermediate members being attached to one another. Such joining may be permanent in nature or may be removable or releasable in nature.

It is also important to note that the construction and arrangement of the system, methods, and devices as shown in the various examples of embodiments is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements show as multiple parts may be integrally formed, the operation of the interfaces may be reversed or otherwise varied, the length or width of the structures and/or members or connector or other elements of the system may be varied, the nature or number of adjustment positions provided between the elements may be varied (e.g. by variations in the number of engagement slots or size of the engagement slots or type of engagement). The order or sequence of any process or method steps may be varied or re-sequenced according to alternative embodiments. Other substitutions, modifications, changes and omissions may be made in the design, operating conditions and arrangement of the various examples of embodiments without departing from the spirit or scope of the present inventions.

While this invention has been described in conjunction with the examples of embodiments outlined above, various alternatives, modifications, variations, improvements and/or substantial equivalents, whether known or that are or may be presently foreseen, may become apparent to those having at least ordinary skill in the art. Accordingly, the examples of embodiments of the invention, as set forth above, are intended to be illustrative, not limiting. Various changes may be made without departing from the spirit or scope of the invention. Therefore, the invention is intended to embrace all known or earlier developed alternatives, modifications, variations, improvements and/or substantial equivalents.

## Claims

1. A vacuum attachment comprising:
a coupler comprising a plate member having a first surface and a second surface, and an adaptor coupled to the first surface;
whereby the second surface of the plate member is substantially arcuate shaped;
whereby the adaptor defines a tubular shaped conduit extending from a first end of the adaptor towards a second end of the adaptor;
whereby the first end of the adaptor is adapted to be coupled to and adapted to be in fluid communication with a vacuum hose in fluid communication with a vacuum source; and
whereby the second end of the adaptor is coupled to and in fluid communication with an attachment hose.

2. The vacuum attachment of claim 1, whereby the plate member defines an elongated aperture extending from the first surface to the second surface.

3. The vacuum attachment of claim 2, further comprising a strap operatively coupled to the elongated aperture.

4. The vacuum attachment of claim 1, whereby the attachment hose comprises a flexible or modular hose.

5. The vacuum attachment of claim 4, whereby the attachment hose has a proximate end and a distal end, a fitting coupled to the proximate end, and a nozzle coupled to the distal end.

6. The vacuum attachment of claim 4, whereby the attachment hose comprises interlocking segments forming articulated joints.

7. A vacuum attachment comprising:
a coupler comprising a plate member having a first surface and a second surface; and an adaptor coupled to the first surface;
whereby the second surface of the plate member is adapted to receive the back of a human hand;
whereby the adaptor defines a tubular shaped conduit extending from a first end of the adaptor towards a second end of the adaptor;
whereby the first end of the adaptor is adapted to be coupled to and in fluid communication with a vacuum hose in fluid communication with a vacuum source; and
whereby the second end of the adaptor is coupled to and in fluid communication with an attachment hose.

8. The vacuum attachment of claim 7, whereby the second surface is substantially arcuate-shaped.

9. The vacuum attachment of claim 8, whereby the plate member defines an elongated aperture extending from the first surface to the second surface.

10. The vacuum attachment of claim 9, further comprising a strap operatively coupled to the elongated aperture.

11. The vacuum attachment of claim 8, whereby the attachment hose comprises a flexible or modular hose.

12. The vacuum attachment of claim 11, whereby the attachment hose has a proximate end and a distal end, a fitting coupled to the proximate end and a nozzle coupled to the distal end.

13. The vacuum attachment of claim 12, whereby the attachment hose comprises interlocking segments forming articulated joints.

14. A method of collecting dust and debris being worked on by a tool, the method comprising:
coupling a vacuum attachment to the back of the hand of a user of a tool having a material remover attachment,
whereby the vacuum attachment comprises a coupler comprising a plate member having a first surface and a second surface, an adaptor coupled to the first surface, the adaptor defining a tubular shaped conduit extending from a first end of the adaptor towards a second end of the adaptor, and the second end of the adaptor being coupled to and in fluid communication with a proximate end of an attachment hose;
coupling the first end of the adaptor to a vacuum hose in fluid communication with a vacuum source;
positioning a distal end of the attachment hose near the material remover attachment and/or a workpiece to be worked by the material remover attachment;
activating the vacuum source; and
working the workpiece with the material remover attachment of the tool.

15. The method of claim 14, further comprising adjusting the position of the distal end of the attachment hose relative to the material remover attachment and/or workpiece to help optimize collection of dust and/or debris created by tool attachment working the workpiece.
